# EUROPEAN PATENT SPECIFICATION

(11) **EP 3 886 535 B1**
(45) Date of publication and mention of the grant of the patent: **25.09.2024**
(21) Application number: 19887616.1
(22) Date of filing: 06.11.2019
(51) Int. Cl.: H05B 6/06, H02M 7/48

(54) **METHOD OF POWER SYNCHRONISATION AND CONTROL FOR A RESONANT POWER INVERTER OF AN INDUCTION HEATING GENERATOR**
VERFAHREN ZUR LEISTUNGSSYNCHRONISIERUNG UND -STEUERUNG FÜR EINEN RESONANTEN WECHSELRICHTER EINES INDUKTIONSHEIZGENERATORS
MÉTHODE DE SYNCHRONISME ET DE COMMANDE DE PUISSANCE POUR UN INVERSEUR DE PUISSANCE RÉSONNANTE D'UN GÉNÉRATEUR DE CHAUFFAGE PAR INDUCTION

(30) Priority: 21.11.2018 ES 201831129
(43) Date of publication of application: 29.09.2021
(73) Proprietor: GH Electrotermia, S.A., 46184 San Antonio de Benagéber (Valencia) (ES)
(72) Inventor: ESPÍ HUERTA, José Miguel, 46184 San Antonio de Benagéber (Valencia) (ES); CASTELLÓ MORENO, Jaime, 46184 San Antonio de Benagéber (Valencia) (ES); CASES SANCHÍS, César Manuel, 46184 San Antonio de Benagéber (Valencia) (ES)
(74) Representative: Ungria López, Javier
(86) International application number: PCT/ES2019/070750
(87) International publication number: WO 2020/104718

(56) References cited:
- EP-A1- 2 148 421
- EP-A1- 2 148 551
- ES-A1- 2 626 572
- JP-A- 2014 056 701
- US-B1- 7 499 290
- US-B2- 9 559 614
- BOOMA NAGARAJAN ET AL: "Phase Locked Loop based Pulse Density Modulation Scheme for the Power Control of Induction Heating Applications", JOURNAL OF POWER ELECTRONICS, vol. 15, no. 1, 20 January 2015 (2015-01-20), pages 65 - 77, XP055764339, ISSN: 1598-2092, DOI: 10.6113/JPE.2015.15.1.65
- LUCIA OSCAR ET AL: "Induction Heating Technology and Its Applications: Past Developments, Current Technology, and Future Challenges", IEEE TRANSACTIONS ON INDUSTRIAL ELECTRONICS, vol. 60, no. 5, 1 May 2014 (2014-05-01), pages 2509 - 2520, XP011530725, ISSN: 0278-0046, DOI: 10.1109/TIE.2013.2281162

## Description

### Object of the invention

The present invention, as expressed in the title of this specification, relates to a method of power synchronisation and control for resonant power inverters, based on the use of a PLL-type (Phase-Locked Loop) algorithm capable of estimating the phase of an alternating signal from the oscillator, chosen as a synchronisation signal, and consisting of the use of said phase as a basis for the construction of advanced or delayed carrier signals that enable the generation of the trigger pulses of the inverter bridge transistors.

The invention is applicable to all types of generators for induction heating, and enables a rapid tuning of the resonance, both in series and parallel, as well as the tuning of the two resonance frequencies of the bifrequency generators.

The invention establishes how, starting from the synchronisation phase provided by the PLL, carrier signals can be built for the usual types of control: frequency modulation or FM, pulse density modulation or PDM, pulse width modulation or PWM both centred and by phase shift or PS, and bifrequential control. For each type of generator, it is determined which oscillator signals can be used as input synchronisation signals to the PLL, in order to then solve the control by any of the mentioned methods.

By means of the solution proposed in the invention, a notable reduction in the response times in the power generation is achieved. This enables the surface heating of small parts, wherein the diffusion of the heat into the part occurs very quickly, applying power pulses with a very short duration. It also enables for better synchronisation in the PDM control, wherein the frequency of the current oscillation changes rapidly between the value of the switching frequency when pulses are applied with the inverter, and the resonance value when no pulses are applied. Moreover, the use of these types of PLLs in generators for induction heating enables the control of the generator in the synchronous frame of reference or "dq" (direct quadrature) to be solved.

The method of power synchronisation and control object of the present disclosure has application in the field of the industry dedicated to the design and commercialisation of resonant switch converters, and more specifically, in the industry dedicated to the design, manufacture and exploitation of induction heating generators for metallurgy.

### Technical problem to be solved and Background of the invention

Induction heating generators use synchronisation mechanisms to tune the resonance frequency of the oscillator. Current synchronisation methods can be classified into two types:
a) the traditional method based on a phase displacement detector plus a controlled oscillator or VCO (voltage controlled oscillator). *[*Surge Analysis of Induction Heating Power Supply With PLL. Mu-Ping Chen, Jan-Ku Chen, Katsuaki Murata, Masatoshi Nakahara and Koosuke Harada. IEEE Transactions on Power Electronics, vol. 16, no. 5, September 2001.], and;
b) self-oscillating methods. For more information, these publications can be consulted:
   - Tunable Self-Oscillating Switching Technique for Current Source Induction Heating Systems. Alireza Namadmalan and Javad S. Moghani. IEEE Transactions On Industrial Electronics, vol. 61, no. 5, May 2014.
   - Self-Oscillating Tuning Loops for Series Resonant Inductive Power Transfer Systems. Alireza Namadmalan. IEEE Transactions on Power Electronics, vol. 31, no. 10, October 2016.
   - Universal Tuning System for Series-Resonant Induction Heating Applications. Alireza Namadmalan. IEEE Transactions on Industrial Electronics, vol. 64, no. 4, April 2017.

In the first case, the phase displacement detector receives the voltage and current inputs from the inverter, and calculates the phase displacement between them. This phase displacement is integrated and brought to the VCO, which modifies the switching frequency. By changing the frequency, and depending on the parameters of the oscillator, the phase displacement is modified. When the frequency stabilises, the integrator guarantees that the phase displacement is zero, indicating that the resonance has been tuned. There are variants of this method, but they all form a phase-locked loop or PLL wherein the oscillator itself intervenes, which limits the tuning speed. As a consequence, the search time of the tuning in the start-up of the generator is high, which prevents the quick application of power. This is important in the surface heating of small parts, wherein the diffusion of the heat into the part is very quick. To prevent this diffusion, the heating power must be applied in the form of a very short pulse and cooling quickly. Another consequence is the difficulty in tuning signals the frequency of which changes quickly, as occurs in PDM control (pulse density modulation) with small modulation indices and short cycles, wherein the frequency changes between the switching value and the resonance value in just a few cycles.

Moreover, the most recent self-oscillating synchronisation methods determine the instants in time for switching starting from the crossovers of the synchronisation signal (current in the series inverter or voltage in the parallel inverter). In the series generator, in order to advance the switching with respect to the current and thus guarantee the inductive behaviour of the oscillator, a phase-advance network is inserted between the measurement of the current and the crossover detector. The adjustment of the advance angle is performed by means of a digital potentiometer controlled from the control unit. The advantage of the method is that, by setting an angle close to zero, the synchronisation is instantaneous, which enables a rapid generation of power in the start-up. The disadvantages are, among others, the limited range of advance angles which can be achieved, the dependence of the angle on the frequency, the dynamic response of the advance network to a change in the value of the potentiometer thereof, the difficulty to compensate for switching delays in high-frequency applications, and the sensitivity of the crossover detector to the noise present in the measurement of the synchronisation signal, which is amplified by the advance network itself. Although crossover comparisons with hysteresis could be performed as a solution to the problem with the noise, this generates an angular delay dependent on the amplitude and frequency of the synchronisation signal which is difficult to compensate for.

Some examples of relevant background art related with the subject-matter of present invention are disclosed in "Phase Locked Loop based Pulse Density Modulation Scheme for the Power Control of Induction Heating Applications", (Booma Nagarajan et al.); US7499290B1 (Mazzola Michael S et al.); US9559614B2 (SMA Solar Technology AG); EP2148421A1 (GH Electrotermia); EP2148551A1 (GH Electrotermia); "Induction Heating Technology and Its Applications: Past Developments, Current Technology and Future Challenges" (IEE Transactions on Industrial Electronics); ES2626572A1 (Univ. Zaragoza); and JP2014056701A (Neturen Co Ltd)).

### Description of the invention

In order to achieve a quick tuning of the resonance which enables the application of power in very short response times and without the aforementioned problems, the present disclosure describes a novel method of power synchronisation and control for resonant inverters for induction heating.

The method of the invention is applied to induction heating generators including an inverter, a heating inductor, and an oscillator.

The method of the invention comprises generating trigger pulses of the transistors of the power inverter by comparing a first triangular carrier signal with a trigger threshold, the trigger threshold being approximately the average value between the end values of the first carrier signal.

The trigger pulses are advanced/delayed by a commutation angle θ with respect to an alternating signal from the oscillator chosen as a synchronisation signal. Said advance/delay can be performed either by advancing/delaying the first carrier signal by an angle of θ without altering the trigger threshold or by reducing/increasing the trigger threshold and the ends of the first carrier signal by a value θ.

The first carrier signal without advance/delay is the estimation of the phase of the synchronisation signal provided by a PLL algorithm.

The advance/delay of the first carrier signal consists of adding/subtracting an angle θ to/from the estimation of the phase.

The control of the power by frequency modulation is performed by changing the value of θ.

According to a possible embodiment, the method of the invention comprises selecting as a synchronisation signal the current of the inverter or the voltage of a series capacitor in the case of a series generator; or the voltage of a parallel capacitor in a parallel generator; or the series current or the voltage of the parallel capacitor in an LLC three-element series-parallel generator.

According to a possible embodiment, the method comprises transmitting pulses to the oscillator with the constant value θ which determines the operation in resonance, but preventing the transmission of a certain amount of pulses to the oscillator, such that the power varies according to the density of the pulses applied to the oscillator.

Likewise, according to a possible embodiment, the method of power synchronisation and control for a resonant power inverter of an induction heating generator comprises using the power inverter in a full-bridge configuration, and triggering one of the two branches of the inverter with an angle θ in order to set the operating frequency, and the other with a delay compared to the first one. This delay is obtained by comparing a second carrier signal with a frequency equal to double the frequency of the first carrier signal and a phase displacement threshold ϕ. The second carrier signal can be symmetric or anti-symmetric but matches with the first carrier signal at the beginning of the cycle thereof. Changing the phase displacement threshold ϕ produces changes in power by modulating the width of the pulses applied to the oscillator.

Preferably, according to a possible embodiment, the method comprises generating a current through the heating inductor with two frequency components using two power inverters and two PLL algorithms. Each PLL algorithm receives a synchronisation signal from the oscillator, one being low-frequency and the other high-frequency. The outputs of the PLLs are used to construct low and high-frequency carrier signals. The power controls of the low and high-frequency components can be performed independently by means of frequency modulation by changing the angle θ, pulse density with a constant angle θ, pulse width modulation by changing the phase displacement ϕ, or also, in the case of the parallel generator, from the input rectifiers maintaining θ constant.

Likewise, according to a possible alternative embodiment to the one mentioned in the previous paragraph, the method comprises generating a current through the heating inductor with two frequency components using a single full-bridge power inverter and two PLL algorithms. These algorithms receive from the oscillator the low-frequency and high-frequency synchronisation signals. The output of the high-frequency PLL is used to construct the second symmetric/anti-symmetric dual-frequency carrier signal. The output of the low-frequency PLL is used to construct two low-frequency and antiphase sinusoidal modulator signals. The trigger pulses to the transistors are determined by comparing the second dual-frequency carrier signal and the modulator signals, one of the modulator signals being used to generate the positive pulses to the oscillator and the other modulator signal to generate the negative pulses. The low-frequency power is controlled by modulating the amplitude of the modulator signals, and the high-frequency power is controlled by modulating the switching angle θ in the series generator, or from the rectifier in the parallel generator.

Thus, according to a possible embodiment, the method comprises selecting as synchronisation signals:
- the output currents of the high and low-frequency inverters, or the voltages of the high and low-frequency capacitors, in a bifrequency series generator with two power inverters, or;
- the current through the low-frequency coil or the voltage of the low-frequency capacitor, and the high-frequency current or the voltage of the high-frequency capacitor, in a bifrequency series generator with a single power inverter, or;
- the voltages of the high and low-frequency capacitors, or the high and low-frequency currents, in a bifrequency parallel generator with two power inverters, or;
- the current through the low-frequency coil or the voltage of the low-frequency capacitor, and the current through the high-frequency capacitor or the voltage of the heating coil, in a bifrequency parallel generator with a single power inverter.

It should be noted that in the current state of the art, the PLL algorithms mentioned are already commonly used in low-frequency applications, such as power converters connected to the electrical grid and converters for energy generation or traction with an electric machine. Therefore, it should be emphasised that the invention does not consist of the PLL itself, but of the use made of the phase estimated with it to generate the trigger pulses in a resonant inverter.

The difference between the aforementioned phase displacement detector and the estimation of the phase of a signal should also be noted. While the phase displacement detector would give a constant quantity when faced with two signals of the same frequency and constant phase displacement, the phase estimation gives us the angular position of the signals in real time, which not only enables us to calculate the phase displacement (by means of subtraction) but also enables us to plan events (such as switching of transistors) dependent on the angular position of the signals.

The synchronisation method proposed in the invention is self-oscillating, but with a completely digital implementation. It enables the advanced or delayed generation of the trigger pulses with respect to the synchronisation signal, in a precise and instantaneous manner. Furthermore, since the PLL offers the angular information at all times, pulses freely distributed throughout the cycle of the synchronisation signal can be generated. Thanks to this, the method can be used to generate the trigger signals of the most common control strategies: frequency modulation (FM), pulse density modulation (PDM), pulse width modulation (both by phase shift PS and by centred PWM), third harmonic operation (THO), bifrequency control, etc.

Since the PLL algorithm is capable of estimating the frequency ω of the synchronisation signal as well, it is easy to compensate for constant time delays td, such as the delay in the triggers of the transistors or delays in measurement, by adding the advance term ω*td.

Another advantage is that the method is not very sensitive to the measurement noise, since the PLL algorithm performs an inherent band-pass filtering in order to extract the fundamental harmonics from the synchronisation signal.

Finally, the use of a PLL such as the one mentioned has the additional advantage of it opening the door to the implementation of the controls of the generators in the synchronous reference frame or "dq". In this reference frame, the amplitudes or envelopes of the alternating signals from the oscillator are calculated without needing circuitry for the detection of the peak value.

For the purpose of helping to make this specification more readily understandable, figures constituting an integral part of the same have been included below, wherein by way of illustration and not limitation they represent the object of the invention.

### Brief description of the figures

As part of the explanation of at least one exemplary embodiment of the synchronisation method for resonant inverters for induction heating object of the present disclosure, the following figures have been included.
Figure 1A shows the structure of an induction heating generator.
Figure 1B shows the basic structure of the control of the inverter using the method of the present invention.
Figure 2A shows a first instant in time of frequency modulation applied to the oscillator, according to a first embodiment of the method of the invention.
Figure 2B shows a second instant in time of frequency modulation applied to the oscillator, according to the first embodiment of the method of the invention.
Figure 3A shows a first instant in time of frequency modulation applied to the oscillator, according to a second embodiment of the method of the invention.
Figure 3B shows a second instant in time of frequency modulation applied to the oscillator, according to the second embodiment of the method of the invention.
Figure 4 shows an embodiment of pulse density modulation (PDM) control, according to the method of the invention.
Figure 5 shows an embodiment of the use of a PLL to perform pulse width modulation (PWM) by phase shift, according to the method of the invention.
Figure 6 shows an embodiment of the generation of centred PWM modulation patterns, according to the method of the invention.
Figure 7 shows an embodiment of the generation of bifrequential modulation patterns, according to the method of the invention.
Figure 8A shows a schematic representation of a series induction heating generator.
Figure 8B shows a schematic representation of a parallel induction heating generator.
Figure 8C shows a schematic representation of a three-element induction heating generator, LLC.
Figure 9A shows a schematic representation of a series bifrequency induction heating generator with two power inverters.
Figure 9B shows a schematic representation of a bifrequency series induction heating generator with a single power inverter.
Figure 10A shows a schematic representation of a bifrequency parallel induction heating generator with two power inverters.
Figure 10B shows a schematic representation of a bifrequency parallel induction heating generator with a single power inverter.

### Detailed description

The present disclosure relates, as already mentioned above, to a power control and synchronisation method for resonant inverters for induction heating.

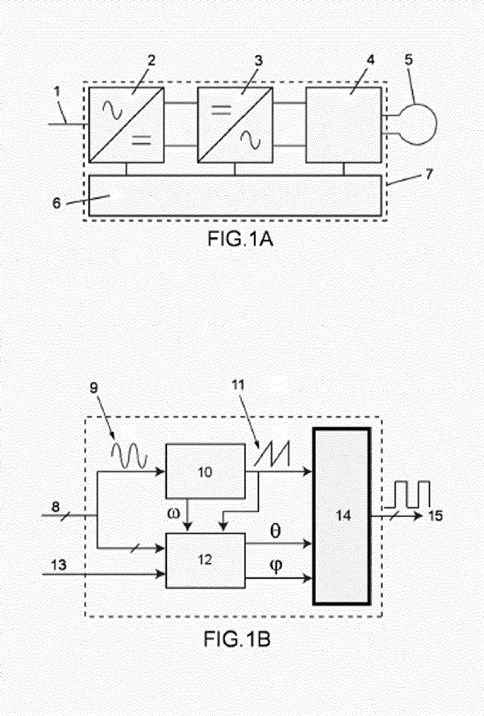

Figure 1A shows the structure of an induction heating generator, formed by the heating inductor (5) and the box (7), which contains the rectifier (2) of the voltage of the electrical network (1), the inverter bridge (3), the oscillator (4), and the control circuit (6) of the inverter (and of the rectifier in the case of the parallel generator).

Figure 1B shows the basic structure of the control of the inverter using the proposed strategy. The inputs to the control are the measurements (8) and the command or limitation signals (13). Among all the measurements, an AC signal from the oscillator is selected as a synchronisation signal (9) (two signals in the case of the bifrequency generator). The PLL algorithm (10) extracts the frequency ω and the phase (11) of the synchronisation signal, passing through values comprised between 0 and 360 degrees in a complete cycle. Therefore, the numerical representation of this phase as a function of time has a sawtooth shape between 0 and 360 degrees. The regulation/limitation block (12) determines the advance/delay angle θ and, in certain types of control, also the angle ϕ for pulse width modulation, such that the heating power is regulated and the oscillator variables are maintained within acceptable ranges. Finally, the signal generator block (14) generates the trigger signals (15) of the inverter transistors starting from the phase of the PLL and the angles θ and ϕ.

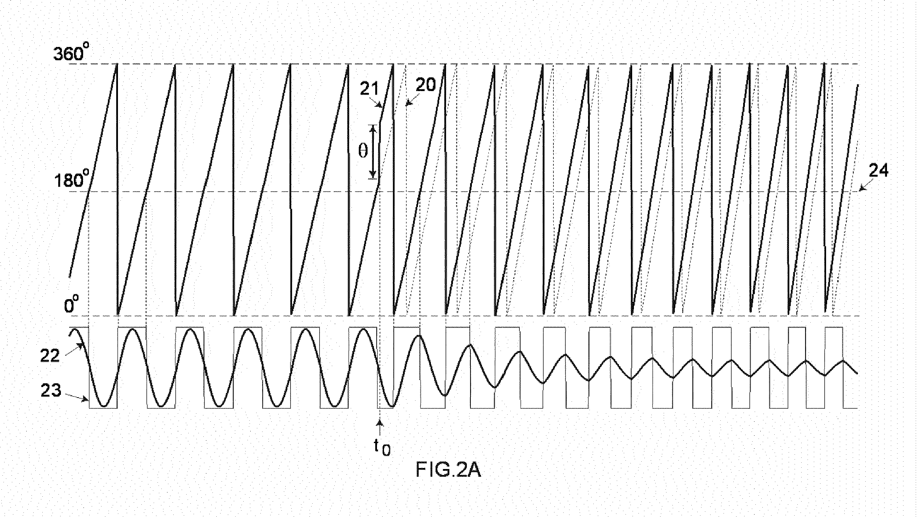

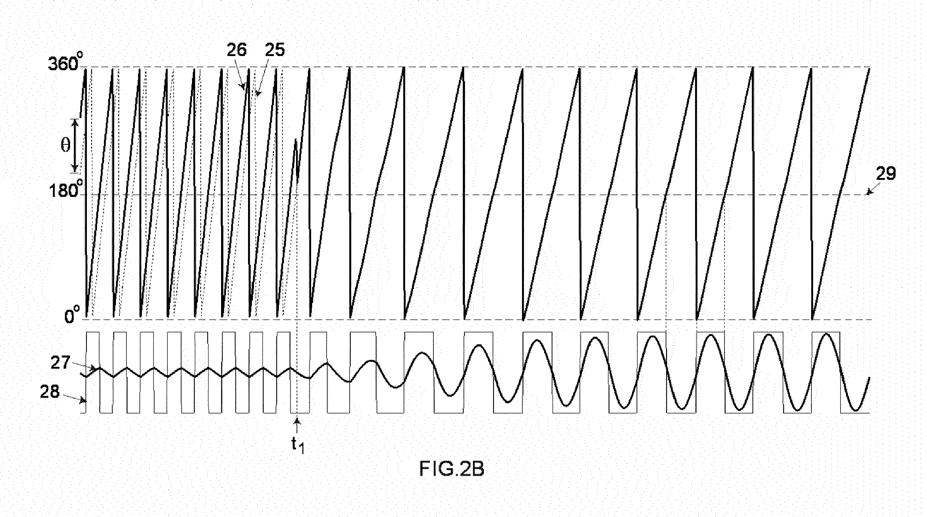

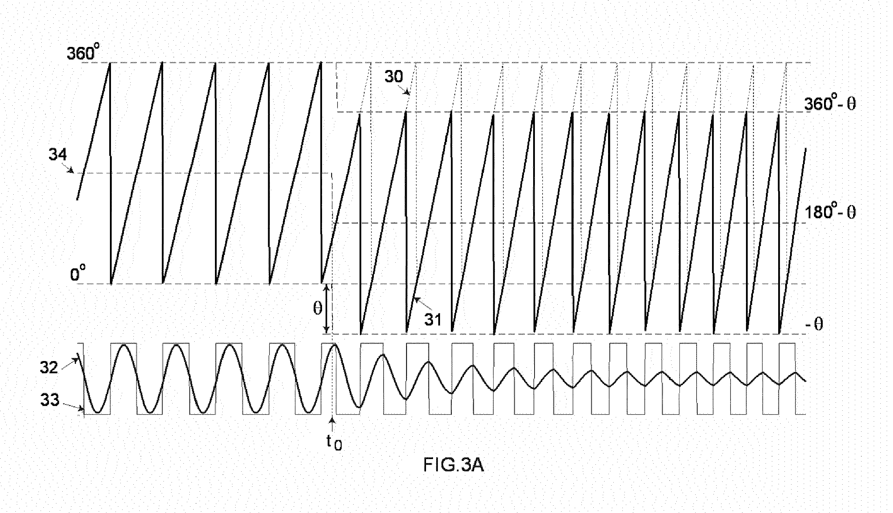

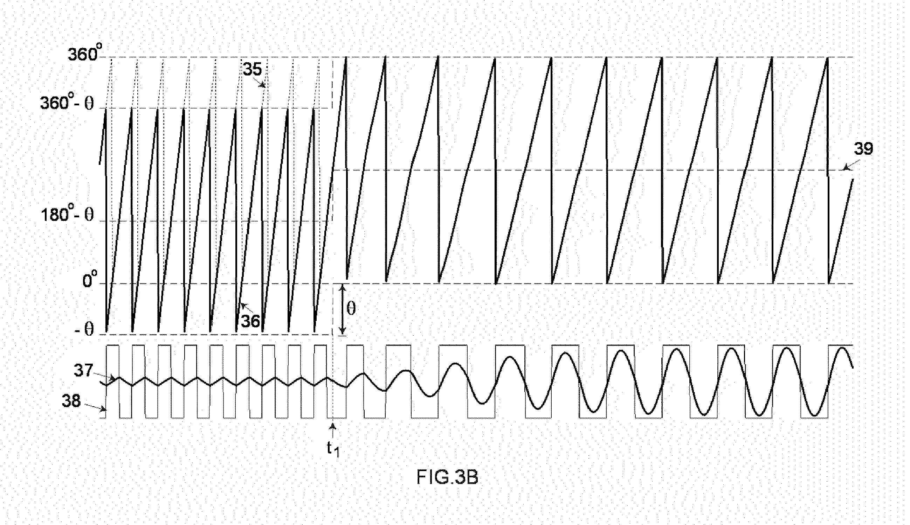

Figures 2 and 3 correspond to a series generator, and show two possible embodiments of the invention. The synchronisation phase calculated by the PLL (20, 25, 30, 35), has been represented between 0 degrees and 360 degrees for convenience and without loss of generality, although in the real implementation in a processor these angles would be codes of values proportional to those indicated. Also seeking simplicity in the description, the crossovers of the synchronisation signal (22, 27, 32, 37) have been made to match with the steps of the phase (20, 25, 30, 35) by 0, 180 and 360 degrees, when the PLL is stabilised. Although a different implementation of the PLL can give different phases in the crossovers, it would be enough to add or subtract a constant angle to/from the phase of the PLL in order to reproduce the situation presented. These figures are explained in detail later on.

In Figures 2A and 2B, the advance/delay of the pulses (23, 28) applied to the oscillator with respect to the current (22, 27) is achieved by respectively adding/subtracting the desired angle θ to/from the synchronisation phase (20, 25) given by the PLL, obtaining the triangular carrier signal (21, 26), and performing the comparison thereof with the intermediate threshold of 180 degrees.

Specifically, Figure 2A shows a sudden change, at the instant in time t0, from a value θ=0 to another θ=80 degrees, which produces the advance of the pulses and the increase in frequency from the operation in resonance to the operation at high frequency. Subsequently, in Figure 2B, the resonance is tuned again, restoring the value θ=0 at the instant in time t1.

An alternative manner of performing the same action is shown in Figures 3A and 3B. Here, the advance/delay of the trigger pulses is achieved by respectively subtracting/adding the desired angle θ to/from the level of 180 degrees, resulting in a threshold for variable comparison with θ. Now, the triangular carrier signal (31, 36) which is compared with the threshold, matches with the synchronisation phase (30, 35), except in the lower and upper limits thereof, which must be modified just like the threshold in order to guarantee pulses with the same duration in a low state as in a high state.

Thus, in Figure 3A, at the instant in time t0, both the comparison threshold and the limits of the carrier (36) are reduced by an amount θ=80 degrees, which causes the advance of the pulses and the change in operation from resonance to high frequency. The effects on the voltage (33) and current (32) of the inverter are identical to those shown in Figure 2A. Subsequently, in Figure 3B, θ=0 degrees is applied again at the instant in time t1, which restores the operation in resonance. Again, the results on the voltage (38) and current (37) of the inverter are identical to those obtained in Figure 2B, showing that the methods of Figures 2 and 3 are equivalent.

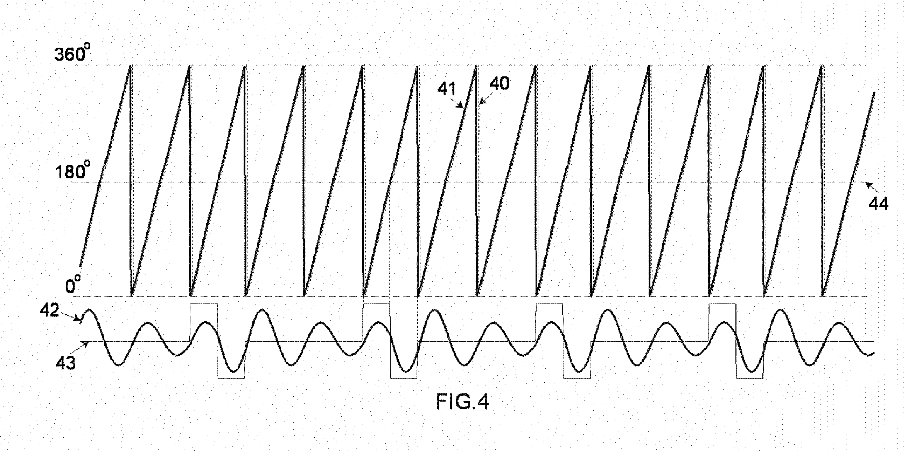

Figures 4, 5, 6 and 7 show examples of application of the invention, wherein it is graphically detailed how to generate the pulses of the inverter in the PDM, PS (Phase-Shift), centred PWM controls and bifrequency control, respectively. In all of them, the strategy of Figure 2 has been chosen to advance the trigger pulses of the transistors with respect to the current.

Figure 4 shows the control by pulse density modulation or PDM applied to a series generator. The operation in resonance is guaranteed by adding a small angle θ to the synchronisation phase (40) obtained with the PLL in order to obtain the slightly advanced carrier signal (41). In this manner, the pulses (43) are always applied slightly advanced with respect to the current (42).

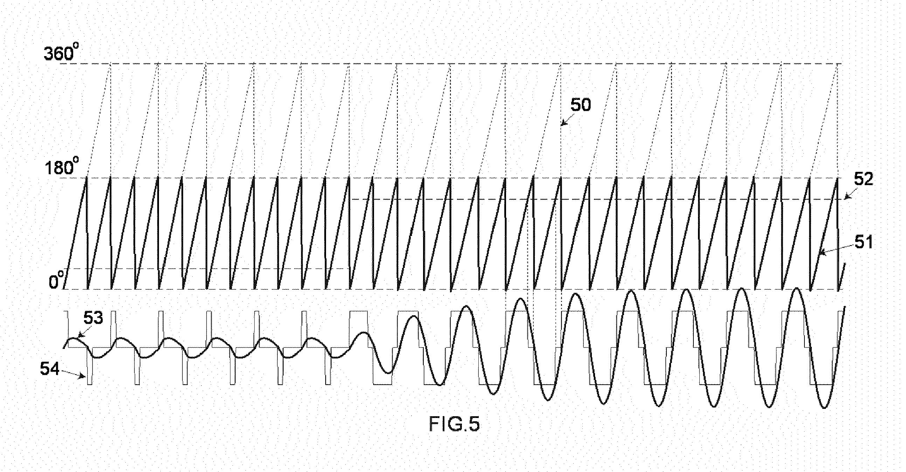

Figure 5 shows how the PLL information can be used to perform pulse width modulation PWM by means of the phase-shift or PS technique. In this case, it is necessary to construct a triangular carrier signal (51) of double the frequency, starting from the synchronisation phase (50). The width of the pulses transmitted by the inverter is obtained from the intersection of the carrier (51) with the threshold (52) (value of ϕ). Although for simplicity in this example, the carrier (51) has not been advanced with respect to the synchronisation phase (50) (in other words, θ=0 has been assumed), in reality, phase displacements θ and pulse widths ϕ can be generated simultaneously and independently.

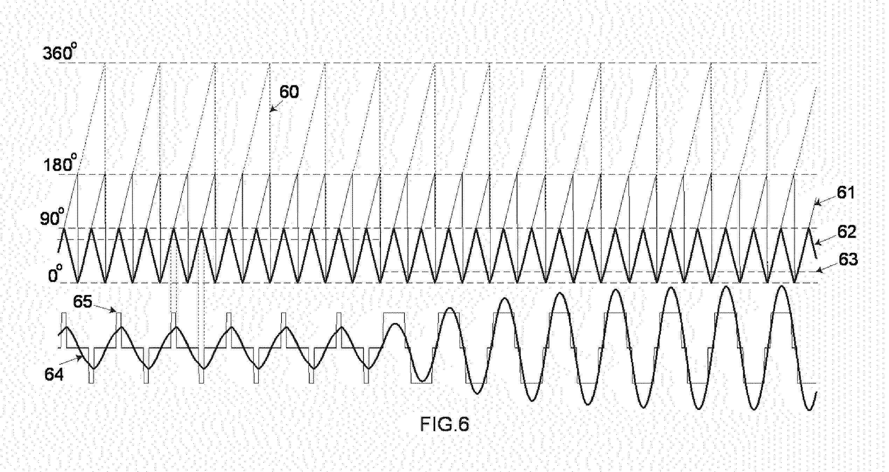

Figure 6 shows how centred PWM modulation patterns can be generated. Again, for simplicity, θ=0 has been assumed. In this case, it is necessary to construct a dual-frequency but symmetric triangular carrier (62), starting from the anti-symmetric dual-frequency triangular signal (61) which is used in the PS control. The width of the pulses is determined by the intersection of the symmetric carrier (62) with the threshold (63).

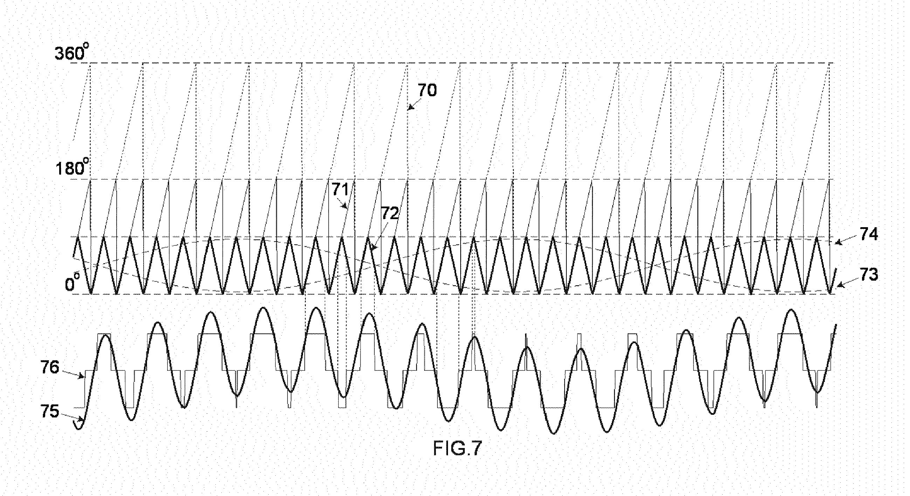

Figure 7 shows how bifrequential modulation patterns can be generated. In the figure, centred PWM has been used, although it can also be performed with PWM-PS. Two complementary sinusoidal modulator signals (73, 74) are used, which alternate each half cycle in order to determine the width of the pulse by comparison with the symmetric carrier (72). The result is a voltage (76) in the inverter and a current (75) wherein the low and high-frequency components are seen. This type of modulation is used in bifrequential generators with a single power inverter.

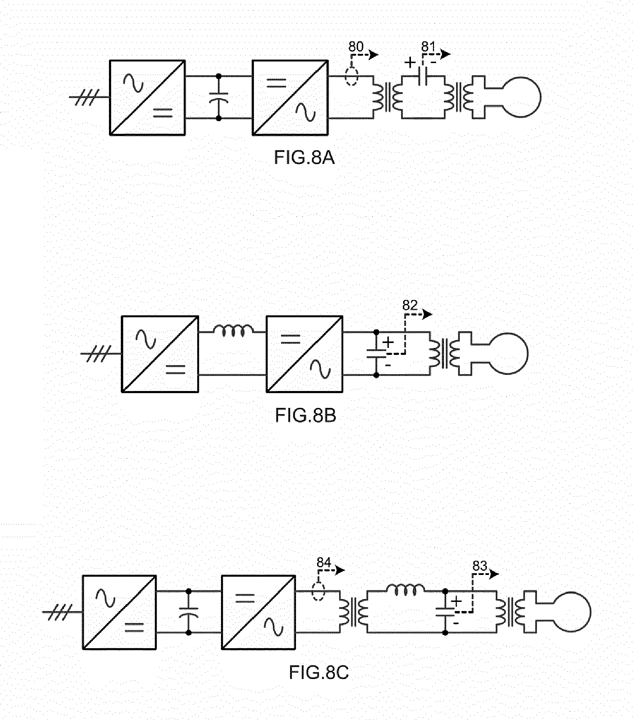

Finally, Figures 8, 9 and 10 show the configurations commonly used in induction heating, and identifying, in each of them, the oscillator variables which could be used as synchronisation signals at the input of the PLL in order to implement the invention. How these signals should be treated is explained below.

Figure 8A shows the series generator. The common measurements can be used as synchronisation signals: the current of the inverter (80) and the voltage of the capacitor (81). In the case of using the voltage of the capacitor, which is delayed 90 degrees with respect to the current, 90 degrees must be added to the synchronisation phase obtained by the PLL, or a PLL implementation must be used which provides the additional 90 degrees.

Figure 8A shows the parallel generator. The common measurement is the voltage in the capacitor (82), which should be used as a synchronisation signal. In order to operate slightly below the resonance, the carrier signal is delayed by a small angle θ.

Figure 8C shows the LLC three-element generator. The current (84) and the voltage of the capacitor (83) are commonly measured. If the latter is used as a synchronisation signal, the series resonance is tuned when the pulses are advanced an angle θ=90 degrees with respect to the voltage in the capacitor.

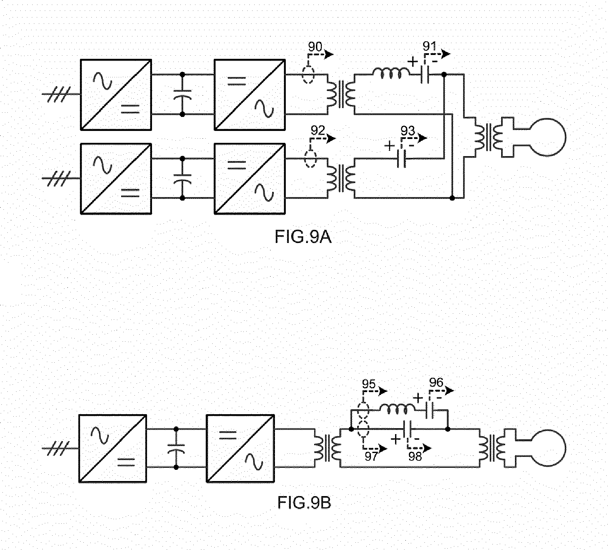

Figures 9A and 9B show bifrequency generators with two power inverters (Figure 9A) and with a single power inverter (Figure 9B).

In Figure 9A, series bifrequency with two inverters, the low-frequency current (90) and the high-frequency current (92), and the voltages of the low (91) and high-frequency capacitors (93) are usually measured. Two PLLs should be used, one connected to (90) or (91) in order to tune the low frequency, and one connected to (92) or (93) in order to tune the high frequency. If a PLL is connected to the voltage of a capacitor, the phase obtained must be advanced 90 degrees. Each PLL provides a triangular-shaped synchronisation phase, a low-frequency and a high-frequency one, starting from which the switching of the low and high-frequency inverters is determined in accordance with the method described. The low and high-frequency current amplitudes can be controlled independently in each inverter by means of any of the mentioned control methods.

In Figure 9B, series bifrequency with a single power inverter, the low (95) and high-frequency currents (97), and the low (96) and high-frequency voltages (98) can be measured. The low-frequency PLL can use (95) or (96), and the high-frequency PLL can use (97) or (98). Again remember that if voltages (96) or (98) are used, 90 degrees must be added to the synchronisation phases obtained with the PLLs. The low-frequency PLL provides a phase the sine function of which enables the modulator signals (73, 74) of Figure 7 to be constructed. The amplitude of these modulator signals determines the amplitude of the low-frequency current generated. Moreover, the high-frequency PLL determines the synchronisation phase (70) of Figure 7, from which the anti-symmetric carrier (71) can be constructed if PS control is used, or the symmetric carrier (72) if centred PWM is used. The advance angle θ of the high-frequency carrier determines the amplitude of the high-frequency current.

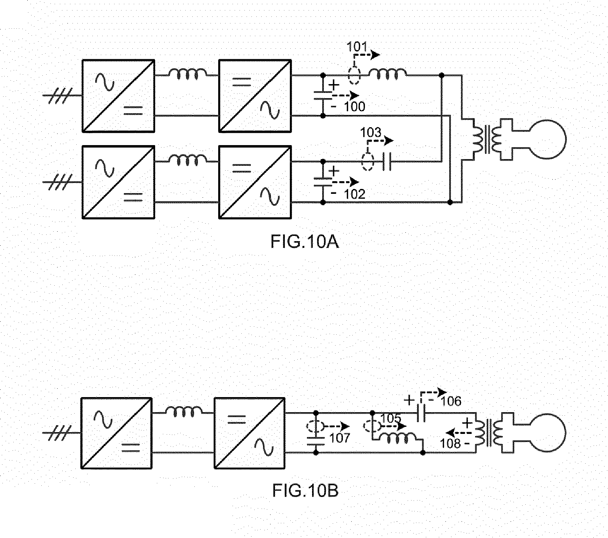

Finally, Figures 10A and 10B show the bifrequency parallel generators, with two inverters (Figure 10A) and with a single inverter (Figure 10B).

Figure 10A shows the parallel bifrequency generator with two inverters. The low (101) and high-frequency currents (103), and low (100) and high-frequency voltages (102) can be measured. The two inverters switch current pulses in resonance, slightly delayed with respect to (100) and (102), with a small delay angle θ. From the rectifier of each converter, the amplitude of the low and high-frequency current pulses is modified in order to independently regulate the resulting low (100) and high-frequency voltage (102) amplitude.

In Figure 10B, parallel bifrequency with a single inverter, the low (105) and high-frequency currents (107), and the low (106) and high-frequency voltages (108) can be measured. The low-frequency PLL provides a phase the sine function of which enables the two necessary sinusoidal modulator signals to be constructed, and the amplitude of which enables the low-frequency amplitude of the resulting voltage in (106) to be controlled. The high-frequency PLL enables the anti-symmetric and symmetric dual-frequency carrier signals to be constructed, using a delay angle θ close to zero. The intersections between the carrier and the modulators determine the instants in time for switching the inverter transistors in order to generate the bifrequency switched current pattern. The amplitude of the resulting high-frequency voltage in (108) is controlled from the rectifier by modifying the amplitude of the current pulses. This also affects the resulting low-frequency voltage amplitude, which forces the amplitude of the modulator signals to act continuously.

## Claims

1. A method for power synchronisation and control for a resonant power inverter (3) of an induction heating generator, wherein said induction heating generator comprises the power inverter (3), a heating inductor (5) and an oscillator (4), **characterised in that** it comprises generating trigger pulses (15) of the transistors of the power inverter (3) by comparing a first triangular carrier signal (21, 26, 31, 36, 41) with a trigger threshold (24, 29, 34, 39, 44), wherein the trigger threshold (24, 29, 34, 39, 44) is approximately the average value between the end values of the first triangular carrier signal (21, 26, 31, 36, 41), wherein said trigger pulses (15) are advanced/delayed by a switching angle θ with respect to an alternating signal from the oscillator chosen as a synchronisation signal (80, 81, 82, 83, 84, 90, 91, 92, 93, 95, 96, 97, 98, 100, 101, 102, 103, 105, 106, 107, 108), wherein said advance/delay can be performed either by advancing/delaying the first carrier signal (21, 26, 31, 36, 41) by an angle θ without altering the trigger threshold (24, 29, 34, 39, 44) or by reducing/increasing the trigger threshold (24, 29, 34, 39, 44) and the ends of the first carrier signal (21, 26, 31, 36, 41) at a value θ, wherein the first carrier signal (21, 26, 31, 36, 41) without advance/delay is the estimation of the phase (11, 20, 25, 30, 35, 40, 50, 60, 70) of the synchronisation signal (80, 81, 82, 83, 84, 90, 91, 92, 93, 95, 96, 97, 98, 100, 101, 102, 103, 105, 106, 107, 108) provided by a PLL algorithm (10), wherein the advance/delay of the first carrier signal (21, 26, 31, 36, 41) consists of adding/subtracting an angle θ to/from the estimation of the phase (11, 20, 25, 30, 35, 40, 50, 60, 70), and wherein the control of the power by frequency modulation is performed by changing the value of θ.

2. The method of power synchronisation and control for a resonant power inverter of an induction heating generator according to claim 1, **characterised in that** it comprises selecting as a synchronisation signal the current of the inverter (80) or the voltage of a series capacitor (81) in the case of a series generator, the voltage of a parallel capacitor (82) in a parallel generator, and the series current (84) or the voltage of the parallel capacitor (83) in an LLC three-element series-parallel generator.

3. The method of power synchronisation and control for a resonant power inverter of an induction heating generator according to claim 1, **characterised in that** it comprises transmitting pulses to the oscillator with the constant value θ which determines the operation in resonance, but preventing the transmission of a certain amount of pulses to the oscillator, such that the power varies according to the density of the pulses applied to the oscillator.

4. The method of power synchronisation and control for a resonant power inverter of an induction heating generator according to claim 1, **characterised in that** it comprises using the full-bridge power inverter wherein one of the two branches of the inverter is triggered with an angle θ in order to set the operating frequency, and the other branch is triggered with a delay with respect to the first one, wherein said delay is obtained by comparing a second carrier signal (62, 72) with a frequency equal to double the frequency of the first carrier signal and a phase displacement threshold ϕ (52, 63), wherein the second carrier signal can be symmetric or anti-symmetric but matches with the first carrier signal at the beginning of the cycle thereof, and wherein changing the phase displacement threshold ϕ produces changes in power by modulating the width of the pulses applied to the oscillator.

5. The method of power synchronisation and control for a resonant power inverter of an induction heating generator according to any of claims 1, 3 or 4, **characterised in that** it comprises generating a current through the heating inductor with two frequency components using two power inverters and two PLL algorithms, wherein each PLL algorithm receives a synchronisation signal from the oscillator, one being low-frequency (90, 91, 100, 101) and the other high-frequency (92, 93, 102, 103), wherein the outputs of the PLLs are used to construct low and high-frequency carrier signals, and wherein the power controls of the low and high-frequency components can be performed independently by means of frequency modulation by changing the angle θ, pulse density with constant angle θ, pulse width modulation by changing the phase displacement ϕ, or also, in the case of the parallel generator, from the input rectifiers maintaining θ constant.

6. The method of power synchronisation and control for a resonant power inverter of an induction heating generator according to claim 4, **characterised in that** it comprises generating a current through the heating inductor with two frequency components using a single full-bridge power inverter and two PLL algorithms, wherein said algorithms receive from the oscillator the low-frequency (95, 96, 105, 106) and high frequency synchronisation signals (97, 98, 107, 108), wherein the output of the high-frequency PLL is used to construct the second symmetric/anti-symmetric dual-frequency carrier signal (72), wherein the output of the low-frequency PLL is used to construct two low-frequency and antiphase sinusoidal modulator signals (73, 74), wherein the trigger pulses to the transistors are determined by comparing the second dual-frequency carrier signal (72) and the modulator signals (73, 74), one of the modulator signals (73) being used to generate the positive pulses to the oscillator and the other modulator signal (74) to generate the negative pulses, and wherein the low-frequency power is controlled by modulating the amplitude of the modulator signals, and the high-frequency power is controlled by modulating the switching angle θ in the series generator, or from the rectifier in the parallel generator.

7. The method of power synchronisation and control for a resonant power inverter of an induction heating generator according to claims 5 and 6, **characterised in that** it comprises selecting as synchronisation signals a low-frequency current (90) or a low-frequency capacitor voltage (91) and a high-frequency current (92) or a high-frequency capacitor voltage (93) in a bifrequency series generator with two power inverters, a low-frequency current (95) or a low-frequency capacitor voltage (96) and a high-frequency current (97) or a high-frequency capacitor voltage (98) in a bifrequency series generator with a single power inverter, a low-frequency capacitor voltage (100) or a low-frequency current (101) and a high-frequency capacitor voltage (102) or a high-frequency current (103) in a bifrequency parallel generator with two power inverters, and the low-frequency current (105) or the low-frequency capacitor voltage (106) and the high-frequency current (107) or the high-frequency voltage (108) in a bifrequency parallel generator with a single power inverter.

## Patentansprüche

1. Verfahren für Leistungs-Synchronisation und -Steuerung für einen Resonanz-Inverter (3) eines Induktions-Heizgenerators, wobei der Induktions- Heizgenerator den Inverter (3), einen Heizinduktor (5) sowie einen Oszillator (4) umfasst, **dadurch gekennzeichnet, dass** es Erzeugen von Auslöse-Impulsen (15) der Transistoren des Wandlers (3) durch Vergleichen eines ersten Dreieck-Trägersignals (21, 26, 31, 36, 41) mit einem Auslöse-Schwellenwert (24, 29, 34, 39, 44) umfasst, wobei der Auslöse-Schwellenwert (24, 29, 34, 39, 44) annähernd der Mittelwert zwischen den Endwerten des ersten Dreieck-Trägersignals (21, 26, 31, 36, 41) ist, wobei die Auslöse-Impulse (15) in Bezug auf ein als ein Synchronisationssignal (80, 81, 82, 83, 84, 90, 91, 92, 93, 95, 96, 97, 98, 100, 101, 102, 103, 105, 106, 107, 108) ausgewähltes Wechselsignal von dem Oszillator um einen Schaltwinkel θ vorverstellt/verzögert werden, wobei die Vorverstellung/Verzögerung durch VorverstellenNerzögern des ersten Trägersignals (21, 26, 31, 36, 41) um einen Winkel θ ohne Ändern des Auslöse-Schwellenwertes (24, 29, 34, 39, 44) oder durch Absenken/Erhöhen des Auslöse-Schwellenwertes (24, 29, 34, 39, 44) und der Enden des ersten Trägersignals (21, 26, 31, 36, 41) bei einem Wert θ durchgeführt werden können, wobei das erste Trägersignal (21, 26, 31, 36, 41) ohne Vorverstellung/Verzögerung der Schätzwert der Phase (11, 20, 25, 30, 35, 40, 50, 60, 70) des Synchronisationssignals (80, 81, 82, 83, 84, 90, 91, 92, 93, 95, 96, 97, 98, 100, 101, 102, 103, 105, 106, 107, 108) ist, das durch einen PLL-Algorithmus (10) bereitgestellt wird, wobei die Vorverstellung/Verzögerung des ersten Trägersignals (21, 26, 31, 36, 41) aus Addieren/Subtrahieren eines Winkels θ zu/von dem Schätzwert der Phase (11, 20, 25, 30, 35, 40, 50, 60, 70) besteht, und wobei die Steuerung der Leistung durch Frequenzmodulation mittels Ändern des Wertes von θ durchgeführt wird.

2. Verfahren für Leistungs-Synchronisation und -Steuerung für einen Resonanz-Inverter eines Induktions-Heizgenerators nach Anspruch 1, **dadurch gekennzeichnet, dass** es Auswählen des Stroms des Wandlers (80) oder, im Fall eines Reihengenerators, der Spannung eines Reihenkondensators (81), der Spannung eines Parallelkondensators (82) in einem Parallelgenerator und des Reihenstroms (84) oder der Spannung des Parallelkondensators (83) in einem LLC-Drei-Element-Reihen-Parallel-Generator als ein Synchronisationssignal umfasst.

3. Verfahren für Leistungs-Synchronisation und -Steuerung für einen Resonanz-Inverter eines Induktions-Heizgenerators nach Anspruch 1, **dadurch gekennzeichnet, dass** es Senden von Impulsen zu dem Oszillator mit dem konstanten Wert θ, der den Betrieb bei Resonanz bestimmt, jedoch Verhindern des Sendens einer bestimmten Menge an Impulsen zu dem Oszillator umfasst, so dass die Leistung entsprechend der Dichte der an den Oszillator angelegten Impulse variiert.

4. Verfahren für Leistungs-Synchronisation und -Steuerung für einen Resonanz-Inverter eines Induktions-Heizgenerators nach Anspruch 1, **dadurch gekennzeichnet, dass** es Einsetzen des Vollbrücken-Inverters umfasst, wobei einer der zwei Zweige des Wandlers mit einem Winkel θ ausgelöst wird, um die Betriebsfrequenz festzulegen, und der andere Zweig mit einer Verzögerung in Bezug auf den ersten ausgelöst wird, wobei die Verzögerung bestimmt wird, indem ein zweites Trägersignal (62, 72) mit einer Frequenz, die das Doppelte der Frequenz des ersten Trägersignals beträgt, und einem Phasenverschiebungs-Schwellenwert ϕ (52, 63) verglichen wird, wobei das zweite Trägersignal symmetrisch oder asymmetrisch sein kann, jedoch mit dem ersten Trägersignal zum Beginn des Zyklus desselben übereinstimmt, und wobei Ändern des Phasenverschiebungs-Schwellenwertes ϕ Änderungen von Leistung durch Modulieren der Breite an den Oszillator angelegter Impulse bewirkt.

5. Verfahren für Leistungs-Synchronisation und -Steuerung für einen Resonanz-Inverter eines Induktions-Heizgenerators nach einem der Ansprüche 1, 3 oder 4, **dadurch gekennzeichnet, dass** es Erzeugen eines Stroms über den Heizinduktor mit zwei Frequenzkomponenten unter Einsatz von zwei Wandlern sowie in zwei PLL-Algorithmen umfasst, wobei jeder PLL-Algorithmus ein Synchronisationssignal von dem Oszillator empfängt, von denen das eine (90, 91, 100, 101) niederfrequent ist und das andere (92, 93, 102, 103) hochfrequent ist, wobei die Ausgänge der PLL eingesetzt werden, um hoch- und niederfrequente Trägersignale zu formen, und wobei die Leistungs-Steuerung der hoch- und niederfrequenten Komponenten unabhängig mittels Frequenzmodulation durch Ändern des Winkels θ, Pulsbreiten-Modulation durch Ändern der Phasenverschiebung ϕ oder auch, im Fall des Parallelgenerators, dadurch durchgeführt werden kann, dass die Eingangs-Gleichrichter θ konstant halten.

6. Verfahren für Leistungs-Synchronisation und -Steuerung für einen Resonanz-Inverter eines Induktions-Heizgenerators nach Anspruch 4, **dadurch gekennzeichnet, dass** es Erzeugen eines Stroms über den Heizinduktor mit zwei Frequenzkomponenten unter Einsatz eines Vollbrücken-Inverters und zweier PLL-Algorithmen umfasst, wobei die Algorithmen von dem Oszillator die niederfrequenten (95, 96, 105, 106) und hochfrequenten Synchronisationssignale (97, 98, 107, 108) empfangen, der Ausgang des hochfrequenten PLL genutzt wird, um das zweite symmetrische/asymmetrische Zweifrequenz-Trägersignal (72) zu formen, der Ausgang des niederfrequenten PLL genutzt wird, um zwei niederfrequente und gegenphasige Sinus-Modulatorsignale (73, 74) zu formen, wobei die Auslöseimpulse zu den Transistoren bestimmt werden, indem das zweite Zweifrequenz-Trägersignal (72) und die Modulatorsignale (73, 74) verglichen werden, wobei eines der Modulatorsignale (73) zum Erzeugen der positiven Impulse zu dem Oszillator eingesetzt wird und das andere Modulator Signal (74) zum Erzeugen der negativen Impulse eingesetzt wird, und die niederfrequente Leistung gesteuert wird, indem die Amplitude der Modulatorsignale moduliert wird, und die hochfrequente Leistung gesteuert wird, indem der Schaltwinkel θ in dem Reihengenerator oder von dem Gleichrichter in dem Parallelgenerator moduliert wird.

7. Verfahren für Leistungs-Synchronisation und -Steuerung für einen Resonanz-Inverter eines Induktions-Heizgenerators nach den Ansprüchen 5 und 6, **dadurch gekennzeichnet, dass** es Auswählen eines niederfrequenten Stroms (90) oder einer niederfrequenten Kondensatorspannung (91) sowie eines hochfrequenten Stroms (92) oder einer hochfrequenten Kondensatorspannung (93) in einem Bifrequenz-Reihengenerator mit zwei Wandlern, eines niederfrequenten Stroms (95) oder einer niederfrequenten Kondensatorspannung (96) und eines hochfrequenten Stroms (97) oder einer hochfrequenten Kondensatorspannung (98) in einem Bifrequenz-Reihengenerator mit einem einzelnen inverter, einer niederfrequenten Kondensatorspannung (100) oder eines niederfrequenten Stroms (101) und einer hochfrequenten Kondensatorspannung (102) oder eines hochfrequenten Stroms (103) in einem Bifrequenz-Parallelgenerator mit zwei Wandlern und des niederfrequenten Stroms (105) oder der niederfrequenten Kondensatorspannung (106) und des hochfrequenten Stroms (107) oder der hochfrequenten Spannung (108) in einem Bifrequenz-Parallelgenerator mit einem einzelnen inverter als Synchronisationssignale umfasst.

## Revendications

1. Procédé de synchronisation et de commande de puissance pour un onduleur de puissance (3) résonant d'un générateur de chauffage par induction, dans lequel ledit générateur de chauffage par induction comprend l'onduleur de puissance (3), un inducteur de chauffage (5) et un oscillateur (4), **caractérisé en ce qu'**il comprend la génération d'impulsions de déclenchement (15) des transistors de l'onduleur de puissance (3) en comparant un premier signal porteur (21, 26, 31, 36, 41) triangulaire avec un seuil de déclenchement (24, 29, 34, 39, 44), dans lequel le seuil de déclenchement (24, 29, 34, 39, 44) est approximativement égal à la valeur moyenne entre les valeurs limites du premier signal porteur (21, 26, 31, 36, 41) triangulaire, dans lequel lesdites impulsions de déclenchement (15) sont avancées/retardées d'un angle θ de commutation par rapport à un signal alternatif de l'oscillateur choisi comme signal de synchronisation (80, 81, 82, 83, 84, 90, 91, 92, 93, 95, 96, 97, 98, 100, 101, 102, 103, 105, 106, 107, 108), dans lequel il est possible d'effectuer ladite avance/ledit retard soit en avançant/retardant le premier signal porteur (21, 26, 31, 36, 41) d'un angle θ sans modifier le seuil de déclenchement (24, 29, 34, 39, 44), soit en réduisant/augmentant le seuil de déclenchement (24, 29, 34, 39, 44) et les limites du premier signal porteur (21, 26, 31, 36, 41) à une valeur θ, dans lequel le premier signal porteur (21, 26, 31, 36, 41) sans avance/retard est l'estimation de la phase (11, 20, 25, 30, 35, 40, 50, 60, 70) du signal de synchronisation (80, 81, 82, 83, 84, 90, 91, 92, 93, 95, 96, 97, 98, 100, 101, 102, 103, 105, 106, 107, 108) fourni par un algorithme PLL (10), dans lequel l'avance/le retard du premier signal porteur (21, 26, 31, 36, 41) consiste à ajouter/soustraire un angle θ à l'estimation de la phase (11, 20, 25, 30, 35, 40, 50, 60, 70) ou de celle-ci, et dans lequel la commande de la puissance par modulation de fréquence est effectuée en changeant la valeur de θ.

2. Procédé de synchronisation et de commande de puissance pour un onduleur de puissance résonant d'un générateur de chauffage par induction selon la revendication 1, **caractérisé en ce qu'**il comprend la sélection, comme signal de synchronisation, du courant de l'onduleur (80) ou de la tension d'un condensateur série (81) dans le cas d'un générateur série, de la tension d'un condensateur parallèle (82) dans un générateur parallèle, et du courant série (84) ou de la tension du condensateur parallèle (83) dans un générateur série-parallèle à trois éléments LLC.

3. Procédé de synchronisation et de commande de puissance pour un onduleur de puissance résonant d'un générateur de chauffage par induction selon la revendication 1, **caractérisé en ce qu'**il comprend la transmission d'impulsions à l'oscillateur avec la valeur θ constante qui détermine le fonctionnement en résonance, mais en empêchant la transmission d'une certaine quantité d'impulsions à l'oscillateur, de sorte que la puissance varie selon la densité des impulsions appliquées à l'oscillateur.

4. Procédé de synchronisation et de commande de puissance pour un onduleur de puissance résonant d'un générateur de chauffage par induction selon la revendication 1, **caractérisé en ce qu'**il comprend l'utilisation de l'onduleur de puissance en pont complet, dans lequel l'une des deux branches de l'onduleur est déclenchée avec un angle θ afin de définir la fréquence de fonctionnement, et l'autre branche est déclenchée avec un retard par rapport à la première, dans lequel ledit retard est obtenu en comparant un deuxième signal porteur (62, 72) dont la fréquence est égale au double de la fréquence du premier signal porteur et un seuil de déphasage ϕ (52, 63), dans lequel le deuxième signal porteur peut être symétrique ou antisymétrique mais correspond au premier signal porteur au début de son cycle, et dans lequel le changement du seuil de déphasage ϕ produit des changements de puissance en modulant la largeur des impulsions appliquées à l'oscillateur.

5. Procédé de synchronisation et de commande de puissance pour un onduleur de puissance résonant d'un générateur de chauffage par induction selon l'une des revendications 1, 3 ou 4, **caractérisé en ce qu'**il comprend la génération d'un courant à travers l'inducteur de chauffage avec deux composantes de fréquence en utilisant deux onduleurs de puissance et deux algorithmes PLL, dans lequel chaque algorithme PLL reçoit un signal de synchronisation de l'oscillateur, l'un étant à basse fréquence (90, 91, 100, 101) et l'autre à haute fréquence (92, 93, 102, 103), dans lequel les sorties des PLL sont utilisées pour construire des signaux porteurs basse et haute fréquence, et dans lequel les commandes de puissance des composants basse et haute fréquence peuvent être effectuées indépendamment au moyen d'une modulation de fréquence en changeant l'angle θ, d'une densité d'impulsions avec un angle θ constant, d'une modulation de largeur d'impulsion en changeant le déphasage ϕ, ou également, dans le cas du générateur parallèle, à partir des redresseurs d'entrée en maintenant θ constant.

6. Procédé de synchronisation et de commande de puissance pour un onduleur de puissance résonant d'un générateur de chauffage par induction selon la revendication 4, **caractérisé en ce qu'**il comprend la génération d'un courant à travers l'inducteur de chauffage avec deux composantes de fréquence en utilisant un seul onduleur de puissance en pont complet et deux algorithmes PLL, dans lequel lesdits algorithmes reçoivent de l'oscillateur les signaux de synchronisation basse fréquence (95, 96, 105, 106) et haute fréquence (97, 98, 107, 108), dans lequel la sortie du PLL haute fréquence est utilisée pour construire le deuxième signal porteur à double fréquence symétrique/antisymétrique (72), dans lequel la sortie du PLL basse fréquence est utilisée pour construire deux signaux modulateurs sinusoïdaux basse fréquence et antiphase (73, 74), dans lequel les impulsions de déclenchement dans les transistors sont déterminées en comparant le deuxième signal porteur à double fréquence (72) et les signaux modulateurs (73, 74), l'un des signaux modulateurs (73) étant utilisé pour générer les impulsions positives dans l'oscillateur, et l'autre signal modulateur (74) pour générer les impulsions négatives, et dans lequel la puissance basse fréquence est commandée en modulant l'amplitude des signaux modulateurs, et la puissance haute fréquence est commandée en modulant l'angle θ de commutation dans le générateur série, ou à partir du redresseur dans le générateur parallèle.

7. Procédé de synchronisation et de commande de puissance pour un onduleur de puissance résonant d'un générateur de chauffage par induction selon la revendications 5 et 6, **caractérisé en ce qu'**il comprend la sélection, comme signaux de synchronisation, d'un courant basse fréquence (90) ou d'une tension de condensateur basse fréquence (91) et d'un courant haute fréquence (92) ou d'une tension de condensateur haute fréquence (93) dans un générateur série bi-fréquence avec deux onduleurs de puissance, d'un courant basse fréquence (95) ou d'une tension de condensateur basse fréquence (96) et d'un courant haute fréquence (97) ou d'une tension de condensateur haute fréquence (98) dans un générateur série bi-fréquence avec un seul onduleur de puissance, d'une tension de condensateur basse fréquence (100) ou d'un courant basse fréquence (101) et d'une tension de condensateur haute fréquence (102) ou d'un courant haute fréquence (103) dans un générateur parallèle bi-fréquence avec deux onduleurs de puissance, et du courant basse fréquence (105) ou de la tension de condensateur basse fréquence (106) et du courant haute fréquence (107) ou de la tension haute fréquence (108) dans un générateur parallèle bi-fréquence avec un seul onduleur de puissance.
